(19)

**Europäisches Patentamt**
**European Patent Office**
**Office européen des brevets**

(11) **EP 4 769 221 A1**

# (12) EUROPEAN PATENT APPLICATION

(43) Date of publication:
**01.07.2026 Bulletin 2026/27**

(21) Application number: **25227902.1**

(22) Date of filing: **31.12.2025**

(51) International Patent Classification (IPC):
$G06N\ 3/045^{(2023.01)}$    $G06N\ 5/045^{(2023.01)}$
$G06N\ 3/084^{(2023.01)}$    $G06N\ 3/044^{(2023.01)}$
$G06N\ 3/0499^{(2023.01)}$    $G06N\ 3/09^{(2023.01)}$

(52) Cooperative Patent Classification (CPC):
**G06N 3/045; G06N 5/045;** G06N 3/044;
G06N 3/0499; G06N 3/084; G06N 3/09

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.12.2024 EP 24223893**

(71) Applicant: **Automaise, S.A.**
**4700-415 Braga (PT)**

(72) Inventors:
• **DOS SANTOS COSTA PINTO, Fábio Hernâni**
**4700-415 Braga (PT)**
• **FERREIRA ROCHA, Patrícia**
**4700-415 Braga (PT)**
• **FERREIRA BASTOS, Fábio**
**4700-415 Braga (PT)**

(74) Representative: **Patentree**
**Edificio Net**
**Rua de Salazares, 842**
**4149-002 Porto (PT)**

(54) **METHOD AND SYSTEM FOR SELF-ADAPTIVE RECURRENT MACHINE-LEARNING PROCESSING UNDER A MULTI-TASK OBJECTIVE**

(57) The present disclosure relates to a computer-implemented method and system for self-adaptive recurrent machine-learning processing of a tabular dataset under a multi-task objective comprising a decision task and a concept-based explanation task.

**EP 4 769 221 A1**

## Description

### TECHNICAL FIELD

The present disclosure relates to a computer-implemented method and system for self-adaptive recurrent machine-learning processing of a tabular dataset under a multi-task objective comprising a decision task and a concept-based explanation task.

### BACKGROUND

The problem of concept-based explainability in multi-task learning refers to the challenge of interpreting and understanding the learned representations and decisions made by a multi-task learning model at the level of individual tasks or concepts. Multi-task learning involves training a single model to perform multiple related tasks simultaneously, which can lead to more efficient and effective learning by leveraging shared knowledge between tasks.

However, when dealing with more complex models, especially deep neural networks, understanding how and why the model makes certain predictions can be difficult.

Concept-based explainability aims to provide human-interpretable explanations for the model's predictions at the level of individual tasks or concepts rather than providing a global explanation for the entire multi-task model. In multi-task learning, the model may learn complex and intertwined representations that are shared across tasks, making it challenging to attribute specific decisions to a particular task or concept.

Existing solutions for the problem include Multi-Output Neural Networks and PonderNet (although it has not yet been applied to multi-output problems).

US20230205674A1 relates to systems and methods for scenario planning by using specially programmed software engines to simulate and detect particular feature variations leading to particular outcomes based on modelling with machine learning techniques. The disclosed technology enables improved model debugging, improved simulation efficiency and accuracy, improved model explainability, improved identification of high risk or high reward scenarios, among other improvements and combinations thereof.

In some embodiments of US20230205674A1, the disclosed technology implements computerized optimization techniques applied via variation generation across a dataset of test input records to optimize for feature variation along with outcome variation.

Moreover, the disclosed technology in US20230205674A1 may provide and/or realize a minimized variation to input data that correspond to a point of transition from one state to another state in an outcome that results from the input data, where the transition to another state is termed a "significant" variation to the output data.

US11663522B2 discloses a method of training a reinforcement machine learning computer system. The method comprises providing a machine-learning computer programming language including a pre-defined plurality of reinforcement machine learning criterion statements, and receiving a training specification authored in the machine-learning computer programming language.

The training specification US11663522B2 of defines a plurality of training sub-goals with a corresponding plurality of the reinforcement machine learning criterion statements supported by the machine-learning computer programming language.

The method of US11663522B2 further comprises computer translating the plurality of training sub-goals from the training specification into a shaped reward function configured to score a reinforcement machine learning model configuration with regard to the plurality of training sub-goals.

The method of US11663522B2 further comprises running a training experiment with the reinforcement machine learning model configuration, scoring the reinforcement machine learning model in the training experiment with the shaped reward function, and adjusting the reinforcement machine learning model configuration based on the shaped reward function.

### GENERAL DESCRIPTION

The present disclosure relates to a computer-implemented method and system for self-adaptive recurrent machine-learning processing of a tabular dataset under a multi-task objective comprising a decision task and a concept-based explanation task.

The present disclosure, also presented in this disclosure as PonderXNet, is a standalone solution designed to address the problem of concept-based explainability in multi-task learning. It can be integrated into existing Machine Learning (ML) systems or used as a standalone component, depending on the requirements of the application. Its relationship with other systems would depend on the specific use case, but it is designed to enhance the explainability and performance of Machine Learning (ML) models in domains where concept-based explanations are crucial.

The present disclosure intends to increases performance and agreement between decision and explanations between 3 and 9 percentage points over the best existing solution. The present results were extracted from experiments carried out on real world datasets.

The present disclosure identified certain limitations of the solutions of the prior art:

The original PonderNet framework was not explicitly designed for multi-task learning, which limited its ability to jointly learn the decision and its explanation in a robust manner. This limitation hindered the model's overall performance and the agreement between the two tasks.

Limited self-correction capability: Multi-Output Neural Networks do not incorporate a mechanism for recurrently self-correcting its predictions. As a result, it is unable to effectively increase the agreement between the decision and explanation over time steps, leading to potential inconsistencies between the two outputs.

High computational complexity: The authors identified that the original PonderNet implementation had a relatively high number of parameters, resulting in increased computational complexity. This hindered its efficiency and scalability for real-world applications.

The lack of agreement between the decision and its explanation in concept-based explanations is relevant technical problem for several Machine Learning (ML) applications. Concept-based explanations are valuable for providing human-friendly interpretations of ML models, but ensuring consistency and alignment between the decision and explanation is challenging and quite often critical for a practical application. The present disclosure aimed to address this problem by developing a method and system, which incorporates a combined loss function and a recurrent self-correction mechanism to enhance the agreement between the decision and its concept-based explanation.

One of the main problems solved by the present disclosure is the lack of agreement between the decision and its explanation in concept-based explainability using multi-task learning. The present disclosure enhances the performance and alignment between these two outputs.

One of the main principles of operation of the disclosure involves the following key components:

Multi-task Learning Adaptation: the disclosure is adapted for multi-task learning. It incorporates a combined loss function that enables the joint learning of the decision and its explanation. By optimizing both tasks simultaneously, the model can leverage knowledge from one task to improve the performance of the other.

Recurrent Self-Correction Mechanism: the disclosure integrates a mechanism for recurrently self-correcting its predictions. This mechanism allows the model to iteratively refine its outputs, increasing the agreement between the decision and its explanation over pondering steps. By continuously adjusting its predictions, the disclosure enhances the consistency and reliability of its results.

The present disclosure can be adapted to different embodiments. For instance, the model architecture can be customized, and hyperparameters can be fine-tuned based on the specific requirements of the application or dataset. Different loss functions or regularization techniques can also be explored to further optimize the performance of the disclosure.

Concept-based explainability has emerged as a way of providing human-friendly explanations describing the reasoning behind the Machine Learning models. However, an explanation is only useful if it is in agreement with the decision over a given process, e.g., in an insurance claim use case, we want to prevent the model from predicting an explanation stating why an insurance claim is accepted while predicting that the claim should be rejected. Following this line of thinking, we introduce the disclosure for predicting concept-based explanations. The present disclosure can recurrently adapt its predictions. Additionally, it is adapted for multi-task learning by including a combined loss and has reduced computational complexity. Results on two real-world insurance claim datasets show that the disclosure improves performance on both targets over a standard multi-task model and increases the agreement between the two tasks. The present disclosure also includes the content of PonderNet [1] which is hereby incorporated by reference namely the step function, the loss function and the halt criteria calculation disclosed in [1].

It is disclosed a computer-implemented method for self-adaptive recurrent machine-learning processing of a tabular dataset under a multi-task objective comprising a decision task and a concept-based explanation task, comprising the steps of:

obtaining input records (I,x) from said tabular dataset;
feeding the obtained input records to a first machine-learning model classifier (ML1);
obtaining, from the first machine-learning model classifier, one or more concept-based explanation classes (E,Yexp) for each fed input record from the first machine-learning model classifier;
feeding the obtained one or more concept-based explanation classes to a second machine-learning model classifier (ML2, f);

obtaining, from the second machine-learning model classifier, a decision class (D, Ydec) for the one or more concept-based explanation classes of each input record;

recurrently carrying out, until a cumulative halting probability prediction, is higher than a predetermined halting probability threshold:

feeding said explanation and decision classes (Yexp, Ydec) and a hidden machine-learning state to a third machine-learning model classifier (ML3) providing a step function (s) to obtain a next hidden machine-learning state, updated one or more concept-based explanation classes, and a halting probability parameter;

feeding the updated one or more concept-based explanation classes to a fourth machine-learning model classifier (ML4, f');

obtaining, from the fourth machine-learning model classifier, an updated decision class (D, Ydec) for the one or more concept-based explanation classes of each input record; and

accumulating the halting probability parameter in the cumulative halting probability prediction;

outputting the updated one or more concept-based explanation classes and the updated decision class.

Preferably, the hardware implementation takes advantage of the specific GPU and CPU aspects. However, the disclosed method cannot be fully parallelised. A hybrid approach is used where a mix of CPU and GPU dynamic allocation and reallocation is used.

According to the disclosure, acceleration and parallelization may occur in two steps:

Forward Pass: During the forward pass, each layer takes input tensors and applies transformations like matrix multiplications and activations. For instance, when a fully connected layer performs a matrix multiplication, each element in the output matrix is independent of the others, allowing it to be computed in parallel in a GPU.

Backward Pass: During backpropagation, gradients are computed for weights and biases in each layer. Since each weight gradient depends on the neurons it connects, they can be computed independently and therefore, in parallel, also in a GPU.

The step iteration occurs in a CPU, that is, recurrently carrying out, until a cumulative halting probability prediction is higher than a predetermined halting probability threshold by the CPU. In contrast, the forward and backward propagation is carried at the GPU.

In an embodiment, the second and fourth machine-learning model classifier are the same machine-learning model classifier.

An embodiment comprises the steps of:

obtaining input records (I,x) from said tabular dataset;

feeding the obtained input records to a first machine-learning model classifier (ML1);

obtaining, from the first machine-learning model classifier, one or more concept-based explanation classes (E,Yexp) for each fed input record from the first machine-learning model classifier;

feeding the obtained one or more concept-based explanation classes to a second machine-learning model classifier (ML2, f);

obtaining, from the second machine-learning model classifier, a decision class (D, Ydec) for the one or more concept-based explanation classes of each input record;

recurrently carrying out, until a cumulative halting probability prediction, is higher than a predetermined halting probability threshold:

feeding said explanation and decision classes (Yexp, Ydec) and a hidden machine-learning state to a third machine-learning model classifier (ML3) providing a step function (s) to obtain a next hidden machine-learning state, updated one or more concept-based explanation classes, and a halting probability parameter;

feeding the updated one or more concept-based explanation classes to the second machine-learning model classifier (ML4, f');

obtaining, from the second machine-learning model classifier, an updated decision class (D, Ydec) for the one or more concept-based explanation classes of each input record; and

accumulating the halting probability parameter in the cumulative halting probability prediction;

outputting the updated one or more concept-based explanation classes and the updated decision class.

An embodiment comprises the step of concatenating the one or more concept-based explanation classes and the decision class of each input record before feeding said explanation and decision classes (Yexp, Ydec) to the third machine-learning model classifier (ML3).

It is also disclosed a computer-implemented method for training a self-adaptive recurrent machine-learning system of a tabular dataset under a multi-task objective comprising a decision task and a concept-based explanation task, comprising the steps of:

obtaining input records (I,x) from a training tabular dataset;

feeding the obtained input records to a first machine-learning model classifier (ML1);

obtaining, from the first machine-learning model classifier, one or more concept-based explanation classes (E,Yexp) for each fed input record from the first machine-learning model classifier;

feeding the obtained one or more concept-based explanation classes to a second machine-learning model classifier (ML2, f);

obtaining, from the second machine-learning model classifier, a decision class (D, Ydec) for the one or more concept-based explanation classes of each input record;

recurrently carrying out, until a predetermined number of iterations is carried out:

feeding said explanation and decision classes (Yexp, Ydec) and a hidden machine-learning state to a third machine-learning model classifier (ML3) providing a step function (s) to obtain a next hidden machine-learning state, updated one or more concept-based explanation classes, and a halting probability parameter;

feeding the updated one or more concept-based explanation classes to a fourth machine-learning model classifier (ML4, f'); and

obtaining, from the fourth machine-learning model classifier, an updated decision class (D, Ydec) for the one or more concept-based explanation classes of each input record;

outputting the updated one or more concept-based explanation classes and the updated decision class;

backpropagating a training loss function for minimizing a prediction loss of combined decision and concept-based explanation tasks from the outputted one or more concept-based explanation classes and the updated decision class, to update weights of the machine-learning model classifiers.

In an embodiment, the training loss function is arranged for promoting exploration and for minimizing a prediction loss of combined decision and concept-based explanation task.

In an embodiment, the training loss function is defined as:

$$L = \sum_{n=1}^{N} p_n \mathcal{L}(\hat{y}_n, y) + \beta KL(p_n, p_G(\lambda_p)) \qquad (3).$$

In an embodiment, the training loss function is defined as:

$$PonderXNetLoss = \alpha_2 [\mathcal{L}(\hat{y}_0^{exp}, y^{exp}) + \mathcal{L}(\hat{y}_0^{dec}, y^{dec})] + L \qquad (9)$$

where L is:

$$L = \sum_{n=1}^{N} p_n \mathcal{L}(\hat{y}_n, y) + \beta KL(p_n, p_G(\lambda_p)) \qquad (3).$$

In an embodiment, the second and fourth machine-learning model classifier are the same machine-learning model classifier.

Preferably, the recurrently carrying out, until a predetermined number of iterations being reached, is carried out by a CPU, and the machine-learning model classifiers, including the backpropagating to update weights of the machine-learning model classifiers, are carried out by one or more GPUs.

Preferably, the method steps are carried out by a CPU, and the machine-learning model classifiers, including the backpropagating to update weights of the machine-learning model classifiers, are carried out by one or more GPUs.

In an embodiment, said machine-learning model classifiers are artificial neural networks selected from: multilayer perceptron networks, long short-term memory - LSTM - networks, recurrent neural network - RNN, encoder-decoder networks, encoder-decoder transformer networks, or combinations thereof.

It is also disclosed a computer-implemented method for self-adaptive recurrent machine-learning processing of a tabular dataset under a multi-task objective comprising a decision task and a concept-based explanation task to be carried out under a dynamic CPU and GPU real-time allocation, comprising the steps of:

obtaining input records from said tabular dataset;

allocating one or more CPUs and one or more GPUs by an orchestrator as a function of the obtained input records;

feeding the obtained input records to a first machine-learning model classifier by the allocated one or more CPUs;

obtaining, by the first machine-learning model classifier implemented by the allocated one or more GPUs, one or more concept-based explanation classes for each fed input record from the first machine-learning model classifier;

feeding the obtained one or more concept-based explanation classes to a second machine-learning model classifier by the allocated one or more CPUs;

obtaining, by the second machine-learning model classifier implemented by the allocated one or more GPUs, a decision class for the one or more concept-based explanation classes of each input record;

recurrently carrying out until the allocated one or more CPUs determine that a cumulative halting probability prediction is higher than a predetermined halting probability threshold:

dynamically reallocating, by the orchestrator, one or more GPUs as a function of real-time resource availability, and model complexity and estimated dataset size of the following recurrent steps;

feeding, by the allocated one or more CPUs, said explanation and decision classes and a hidden machine-learning state to a third machine-learning model classifier implemented by the reallocated one or more GPUs to provide a step function to obtain a next hidden machine-learning state, updated one or more concept-based explanation classes, and a halting probability parameter;

feeding, by the allocated one or more CPUs, the updated one or more concept-based explanation classes to a fourth machine-learning model classifier;

obtaining, by the fourth machine-learning model classifier by the reallocated one or more GPUs, an updated decision class for the one or more concept-based explanation classes of each input record; and

accumulating, by the allocated one or more CPUs, the halting probability parameter in the cumulative halting probability prediction;

outputting, by the allocated one or more CPUs, the updated one or more concept-based explanation classes and the updated decision class.

An embodiment comprises the steps of:

obtaining input records from said tabular dataset;

allocating one or more CPUs and one or more GPUs by an orchestrator as a function of the obtained input records;

feeding the obtained input records to a first machine-learning model classifier by the allocated one or more CPUs;

obtaining, by the first machine-learning model classifier implemented by the allocated one or more GPUs, one or more concept-based explanation classes for each fed input record from the first machine-learning model classifier;

feeding the obtained one or more concept-based explanation classes to a second machine-learning model classifier by the allocated one or more CPUs;

obtaining, by the second machine-learning model classifier implemented by the allocated one or more GPUs, a decision class for the one or more concept-based explanation classes of each input record;

recurrently carrying out until the allocated one or more CPUs determine that a cumulative halting probability prediction is higher than a predetermined halting probability threshold:

dynamically reallocating, by the orchestrator, one or more GPUs as a function of real-time resource availability, and model complexity and estimated dataset size of the following recurrent steps;

feeding, by the allocated one or more CPUs, said explanation and decision classes and a hidden machine-learning state to a third machine-learning model classifier implemented by the reallocated one or more GPUs to provide a step function to obtain a next hidden machine-learning state, updated one or more concept-based explanation classes, and a halting probability parameter;

feeding, by the allocated one or more CPUs, the updated one or more concept-based explanation classes to the second machine-learning model classifier;

obtaining, by the second machine-learning model classifier by the reallocated one or more GPUs, an updated decision class for the one or more concept-based explanation classes of each input record; and

accumulating, by the allocated one or more CPUs, the halting probability parameter in the cumulative halting probability prediction;

outputting, by the allocated one or more CPUs, the updated one or more concept-based explanation classes and the updated decision class.

It is also disclosed a computer-implemented method for training a self-adaptive recurrent machine-learning system of a tabular dataset under a multi-task objective comprising a decision task and a concept-based explanation task to be carried out under a dynamic CPU and GPU real-time allocation, comprising the steps of:

obtaining input records from a training tabular dataset;
allocating one or more CPUs and one or more GPUs by an orchestrator as a function of the obtained input records;
feeding the obtained input records to a first machine-learning model classifier by the allocated one or more CPUs;
obtaining, by the first machine-learning model classifier implemented by the allocated one or more GPUs, one or more concept-based explanation classes for each fed input record from the first machine-learning model classifier;
feeding the obtained one or more concept-based explanation classes to a second machine-learning model classifier by the allocated one or more CPUs;
obtaining, by the second machine-learning model classifier implemented by the allocated one or more GPUs, a decision class for the one or more concept-based explanation classes of each input record;
recurrently carrying out until the allocated one or more CPUs determine that a predetermined number of iterations is reached:

dynamically reallocating, by the orchestrator, one or more GPUs as a function of real-time resource availability, and model complexity and estimated dataset size of the following recurrent steps;
feeding, by the allocated one or more CPUs, said explanation and decision classes and a hidden machine-learning state to a third machine-learning model classifier implemented by the reallocated one or more GPUs to provide a step function to obtain a next hidden machine-learning state, updated one or more concept-based explanation classes, and a halting probability parameter;
feeding, by the allocated one or more CPUs, the updated one or more concept-based explanation classes to a fourth machine-learning model classifier; and
obtaining, by the fourth machine-learning model classifier by the reallocated one or more GPUs, an updated decision class for the one or more concept-based explanation classes of each input record;

outputting, by the allocated one or more CPUs, the updated one or more concept-based explanation classes and the updated decision class; and
backpropagating a training loss function for minimizing a prediction loss of combined decision and concept-based explanation tasks from the outputted one or more concept-based explanation classes and the updated decision class, to update weights of the machine-learning model classifiers.

In an embodiment, the backpropagating of the training loss function is carried out by one or more GPUs.
In an embodiment, the orchestrator allocates one or more GPUs for the backpropagating of the training loss function.
It is also disclosed a non-transitory computer-readable medium comprising computer program instructions for implementing a self-adaptive recurrent machine-learning processing of a tabular dataset under a multi-task objective comprising a decision task and a concept-based explanation task, which when executed by a processor, cause the processor to carry out the method of any of disclosed embodiments.
It is also disclosed a computer-readable memory and a computer processor configured to carry out the method of any of the disclosed embodiments.
These and other aspects, features, and advantages can be appreciated from the following description of certain embodiments and the accompanying drawing figures and claims.

## BRIEF DESCRIPTION OF THE DRAWINGS

The following figures concern embodiments for illustrating the disclosure and should not be seen as limiting the scope of invention which is defined by the recitations in the claims appended hereto and equivalents thereof.

**Figure 1** is a table, Table 1, with raw datasets description.
**Figure 2** is a table, Table 2, with difference in percentage points against the Single-Task classifier on the test set for Dataset A.

**Figure 3** is a table, Table 3, with difference in percentage points against the Single-Task classifier on the test set for Dataset B.

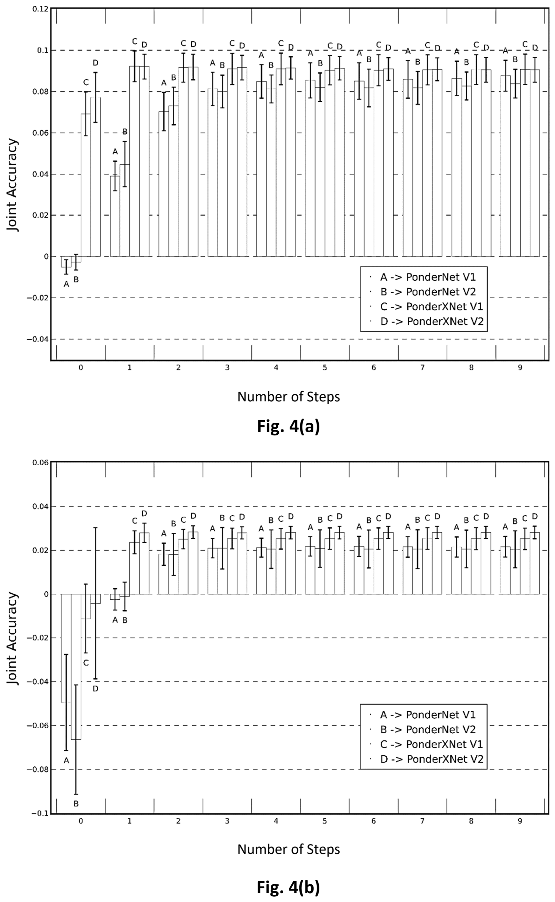

**Figure 4** is a schematic representation of a detailed view of the Feature Extraction Mechanism applied to a real example, from extraction of features from the columns header and its values preceded by concatenation of the different feature types.

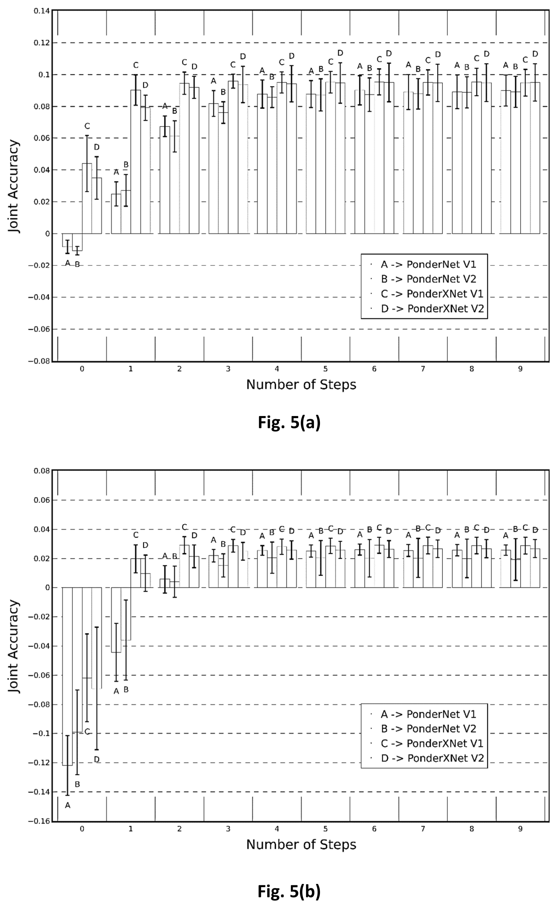

**Figure 5** is a schematic representation of an embodiment of an extraction of string detection features.

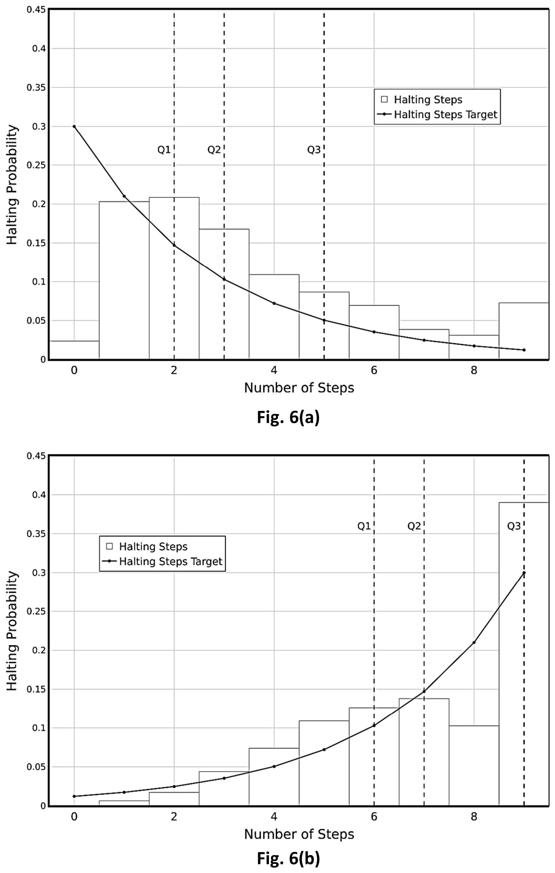

**Figure 6** is a schematic representation of an embodiment of a schematic view of extraction of the application of the feature extraction mechanism for a dataset column without augmentation.

**Figure 7** is a schematic representation of the disclosed prediction mechanism.

**Figure 8** is a schematic representation of embodiments comprising the disclosed machine-learning models arranged as (a) in the embodiment of paragraph 0037 and as (b) in the embodiment of paragraph 0038.

**Figure 9** is a schematic representation of an embodiment comprising a hardware-based system for carrying out the steps of the present disclosure.

## DETAILED DESCRIPTION

The Explainable AI (xAI) [2] paradigm has been promoting the need for transparency that Machine Learning (ML)-based decision-making systems require. One of the most recent research streams within this domain is concept-based explanations [3]. In such a setting, a high-level explanation is provided to the user instead of the most common low-level explanation based on features. For instance, in an insurance claim automation use case, a decision to reject a claim can be explained by an "exceed plafond" output, instead of a set of encoded feature(s) that reflect the same situation (e.g., "account balance equals -100").

When concept-based explanations are available for a given dataset, research shows that it is often beneficial to jointly learn the decision and its explanation, as a supervised multi-task learning problem [6]. By doing so, the present disclosure expects to leverage knowledge from one task to the other and notice an overall increase in performance. This is particularly relevant in use cases for which it is necessary to correctly predict both the decision and explanation in order to make the ML system useful. As an example, the present disclosure wants to prevent the model from simultaneously predicting an explanation describing why a claim should be accepted and a decision stating it should be rejected, or vice-versa.

With this in mind, the present disclosure proposes a method that is not only able to jointly learn a model that predicts both outputs, but that is also able to adapt itself in a self-adaptive manner by recurrently taking into account both predictions, and therefore increasing the agreement between the two outputs. The present method and system was adapted for the problem scenario described above.

The contribution of this disclosure is two-fold. First, it was proposed as a method and system for predicting concept-based explanations and for multi-task learning problems. The disclosure has at least three main distinguishing aspects: 1) it is adapted for multi-task problems, with a combined loss that joins the cross-entropy loss of each task; 2) it has the ability to recurrently correct itself in a self-adaptive manner, thus increasing the agreement between both predictions and 3) it has fewer parameters, decreasing the computational complexity of the model. Second, the present disclosure compares and present the results of several methods on two real-world datasets for insurance claim prediction. The present disclosure is the first work that presents results of adaptive computation methods on tabular classification datasets. This method improves performance on both targets, explanation, and decision, against a MultiLayer Perception (MLP) multitask model and the PonderNet implementation. Additionally, the present disclosure increases the agreement between the two outputs - decision and explanation, i.e., the model hits both predictions simultaneously more often than the remainder of the methods.

The following pertains to related work. Deep Learning (DL) models operate on low-level features (for the sake of an example, consider a feature called "flag315") instead of high-level concepts. Likewise, typical approaches to explainability rely on such features to provide explanations (e.g., "the claim is rejected because flag315 = 1"). However, these low-level features are not easily interpretable by humans without a data dictionary. Even so, it can be difficult to interpret if the explanation uses multiple features. Alternative methods have emerged as a way of providing human-friendly interpretations of DL models (e.g., "the claim is rejected because the service is not considered medically necessary"). Formally, we want to learn a function $f$ that maps an input $x$ to both an output decision and its respective explanation

$$y^{exp} \text{ as } f : x \rightarrow (y^{exp}, y^{dec}).$$

Much of the initial research on xAI focused on explaining how convolutional neural networks (CNNs) produce image classification predictions. A very well-known concept-based method is Testing with Concept Activation Vectors (TCAVs) [3]. This method is able to measure the sensitivity of model predictions to changes in inputs with respect to user-defined concepts. For instance, CAVs can quantify the impact of "stripe", or any other concept, on predicting "zebra". Given an image classifier and two sets of examples (a set representative of "stripe" patterns and a set of examples in which the concept is not present), it finds a vector that separates the activations produced by each set.

Further research takes advantage of these explanations for the predictive task. Concept Bottleneck Models [4] first predict the concepts and then operate on those to make a final prediction. For example, given a task of identifying bird species, the bottleneck layer predicts a set of human-interpretable concepts (e.g., "wing color" or other bird attributes) that is used to achieve the final output. Concept Bottleneck Models falls into Multi-Task Learning (MTL) [5, 6]. MTL is a technique that aims at learning related tasks jointly so that the knowledge relevant to a task can be leveraged by others and improve the overall performance. However, this approach poses a challenge of task balancing, i.e., preventing the explainability task from overshadowing the predictive task and vice-versa [7].

Surprisingly, most work around concept-based explainability has been done on the image domain [3, 4, 8], and therefore is not suitable for tabular data. Nevertheless, architectures similar to bottleneck models have been recently proposed and applied to more various tasks, such as fraud detection. In Belem et al. [9], the explanation vector (consisting of concepts such as "suspicious item") is also fed to the decision layer following the assumption it carries pertinent information for the predictive task (whether a transaction is "fraudulent" or not). The loss functions of both tasks are combined, each term weighted by a parameter that manages the accuracy-explainability trade-off.

However, it is crucial to ensure that the model predicts a decision that is related to the explanation and vice-versa, i.e., to avoid a scenario in which the model outputs an explanation describing the reasoning behind a decision while predicting an unrelated decision.

Typically, the amount of computation used in neural networks grows with the size of the inputs or as the network becomes deeper. However, the general idea behind Adaptive Computation is that the amount of effort required for a task is related to its complexity. Therefore, the present disclosure is a new method that achieves a compromise between accuracy and computation cost by adjusting the amount of computation to the complexity of the task. The method is a contribution to the Adaptive Computation Time (ACT) approach [10] that introduces a different halting process and a combined loss.

Alternative methods of adaptive computation include Multi-Exit Models. Previous work has proposed a novel approach to training deep neural networks with multiple intermediate classifiers [11]. Based on the assumption that not all samples require the same amount of computation to generate an accurate prediction, "multi-exits" models take advantage of intermediate branches to perform early exit in inference time. The early exit depends on whether or not the confidence score produced by each branch is higher than a threshold.

The following pertains to an adaptive Computation for Concept-Based Explainability. In the PonderNet architecture, the input data $x$ and an initial state $h$ are passed through a step function $s$ to initialize the first halting step. At each halting step, an output $\hat{y}_n$, the next step's hidden state $h_{n+1}$ and a scalar probability are predicted, as shown in Equation 1:

$$\hat{y}_n, h_{n+1}, \lambda_n = s(x, h_n) \qquad (1)$$

where the halting probability at each step is given by Equation 2, a generalization of the geometric distribution:

$$p_n = \lambda_n \prod_{j=1}^{n-1} (1 - \lambda_j) \qquad (2)$$

The loss function is a sum of two loss terms, reconstruction and regularization, over all halting steps N, as follows:

$$L = \sum_{n=1}^{N} p_n \mathcal{L}(\hat{y}_n, y) + \beta KL(p_n, p_G(\lambda_p)) \qquad (3)$$

$\mathcal{L}$ represents a chosen loss function such as cross-entropy or mean squared error. KL represents the Kullback-Leibler divergence loss function between the halting probability distribution and a prior geometric distribution $p_G(\lambda_p)$ parameterized by a $\lambda_p$ The regularization loss term is used to force the model to give non-zero probability to all number of steps, therefore promoting computation in each step. $\beta$ is another hyperparameter that weighs the regularization term of the loss function. $p_G$ is given by Equation 4:

$$p_G(n) = \lambda_p(1 - \lambda_p)^{n-1} \tag{4}$$

The following pertains to the disclosed method and system. In an embodiment, to fit the disclosed problem, Equation 1 is adapted for multiple outputs as shown:

$$\hat{y}_n^{dec}, \hat{y}_n^{exp}, h_{n+1}, \lambda_n = s(x, h_n) \tag{5}$$

Where $\hat{y}_n^{dec}$, $\hat{y}_n^{exp}$ represent the decision and explanation outputs respectively. In an embodiment, equation 6 shows how the loss function looks like when adapting to the multi-task nature of the problem:

$$L = \sum_{n=1}^{N} p_n[\alpha_1 \mathcal{L}(y^{dec}, \hat{y}_n^{dec}) + (1 - \alpha_1)\mathcal{L}(y^{exp}, \hat{y}_n^{exp})] + \beta KL(p_n || p_G(\lambda_p)) \tag{6}$$

The disclosed architecture is a development in which a forward pass is disclosed such that the step function receives the output of the previous step instead of the data, *x*:

$$\hat{y}_n^{exp}, h_n, \lambda_n = s(\hat{y}_{n-1}^{dec} \, \| \, \hat{y}_{n-1}^{exp}, h_{n-1}) \tag{7}$$

where $\|$ is the concatenation operator applied to both outputs. $y_n^{dec}$ is predicted from the $y_n^{exp}$ output.

$$\hat{y}_n^{dec} = f(\hat{y}_n^{exp}) \tag{8}$$

In an embodiment, these modifications were implemented such that both predictions interact and are influenced by each other, as opposed to exclusively having the decision influenced by the explanation.

It is important to note that the disclosure requires an initial prediction as input, $\hat{y}_0^{dec} \, \| \, \hat{y}_0^{exp}$. To generate this embedding, dense layers may be added prior to the step function. The number of dense layers is considered a hyperparameter. Additionally, to control overfitting, a dropout layer is used after the dense layers, right before the step function.

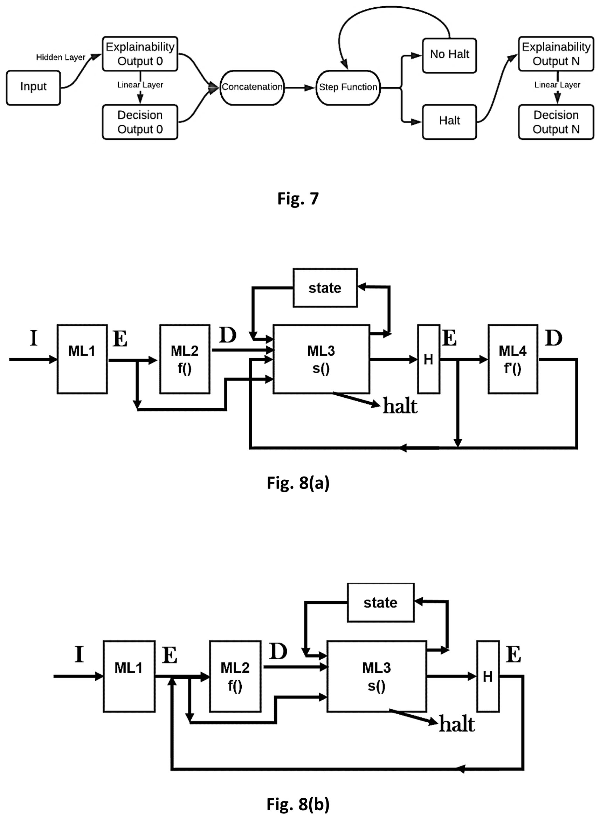

A schematic representation of the disclosure, as explained above, is presented in Figure 7.

In an embodiment, the computer-implemented method for self-adaptive recurrent machine learning applied to tabular datasets under a multi-task objective necessitates a purpose-built distributed training infrastructure capable of addressing the inherent computational complexity of such models. To this end, a system architecture such as BRONN (Batch Resource Orchestration for Neural Networks) may be used, a distributed training system that is designed to meet these requirements.

The following relates to System Capabilities. In an embodiment, the distributed training system provides the following key functionalities:

Training Optimisation and Acceleration, where the system may enable efficient distribution of computational workloads across heterogeneous hardware resources, significantly reducing model training time whilst maximising throughput;

Secure and Compliant Training Environment, where model training may be executed on dedicated server infrastructure, ensuring full compliance with organisational security protocols and data privacy regulations; and

The system incorporates dynamic GPU allocation mechanisms that intelligently match algorithmic requirements and dataset characteristics to appropriately sized compute resources, for instance, thereby minimising unnecessary energy consumption, or maximizing computational efficiency and/or algorithm-system feature matching.

The following pertains to Architectural Considerations. Due to the recurrent nature of the proposed method, complete parallelisation of the training process is not feasible. Instead, in an embodiment, training proceeds iteratively, with parallelisation applied at the level of individual pondering steps. Each pondering step may be distributed across one or more GPUs depending on the computational requirements.

In an embodiment, the orchestration layer dynamically assigns training tasks to available servers and GPU resources based on real-time assessment of dataset size, model complexity, and current resource availability. This adaptive allocation strategy may ensure optimal utilisation of computational infrastructure whilst maintaining training efficiency.

The following pertains to Infrastructure Specification. In an embodiment, the system operates across a heterogeneous, vertically and horizontally scalable, cluster of servers with varying computational capabilities, enabling flexible resource allocation based on task requirements.

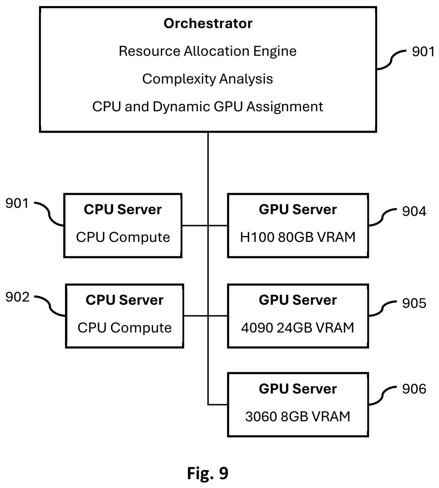

**Figure 9** schematically represents an embodiment comprising a hardware-based system for carrying out the steps of the present disclosure, where a training request is received with a model and dataset submission; **901** represents an Orchestrator, for example a BRONN orchestrator, which is a computation resource allocation device; **902** is a first server, i.e., Server 1, for CPU computation; **903** is a second server, i.e., Server 2, for CPU computation; **904** is a third server, i.e., Server 3, for high performance GPU computation; **905** is a fourth server, i.e., Server 4, for medium performance GPU computation; and **906** is a fifth server, i.e., Server 5, for standard performance GPU computation.

In an embodiment, a third server **904,** i.e., Server 3, comprises a NVIDIA H100 GPU for performing high performance GPU computation steps required by any of the machine-learning models, a fourth server **905,** i.e., Server 4, comprises a NVIDIA RTX 4090 GPU for performing medium performance GPU computation steps required by any of the machine-learning models, and a fifth server **906,** i.e., Server 5, comprises a NVIDIA RTX 3060 GPU for performing standard performance GPU computation steps required by any of the machine-learning models. Hence, an Orchestrator **901** may, for instance, allocate certain high-volume GPU computation operations to said third server **904,** and other low-volume GPU computation operations to said fifth server **906,** depending on the complexity analysis.

The following pertains to experimental results. The main goals of this experimental work can be formulated as measuring the performance of the proposed method relate to the performance of single-task learning and multi-task learning approaches, in terms of joint accuracy between concept explanations and decisions (RQ1); measuring the performance of the disclosure relate to the performance of the PonderNet, both in terms of joint accuracy between concept explanations and decisions, and computational complexity (RQ2); measuring the joint accuracy to include the loss of the initial prediction into the loss function of the disclosure (RQ3).

The following pertains to experimental data. The present disclosure tested the methods on two real-world insurance claim datasets. An insurance claim consists of a formal request made to one's insurance company to pay for an expense covered under their insurance policy. The sequential nature of processing a claim and the high volume of processes that an insurer receives makes it a perfect fit for automation, which results in improved efficiency, speed, and, consequently, customer service. However, decision-making systems must be compliant with the legal right to an explanation, thus motivating the use of concept-based explainability. Besides, in a sector as competitive and sensitive as insurance, a wrong decision or explanation can lead to severe consequences on the well-being of the policyholder.

Both datasets include features regarding the policyholder, the policy, and the claim itself. Each sample contains a decision stating whether the claim is accepted, rejected, or partially accepted; additionally, each sample also has an explanation describing the reasoning behind the decision. Both datasets consist of claims concerning the same period, but each focuses on different types of policies.

The data was processed by proprietary automatic feature engineering pipeline, which added nine new features to each dataset. Then, the imputation of missing values is performed for the numerical features using the mean value of each feature and, since the categorical features have low cardinality, one-hot encoding is applied. Finally, the data was normalized.

The following pertains to the disclosed methods. Establishing a baseline is a crucial aspect of evaluating the performance of any ML model. In the present disclosure set the first baseline by training a 3-layer MLP for each task separately, where the first and second layers have 64 and 32 hidden units, respectively. The output layer is followed by a softmax activation function and produces either the explanations or the decision outputs. In the disclosed experiments, this approach is named Single-Task Classifier.

The problem with the previous approach is that the outputs of each model may not match because the models are unaware of the relationship between the tasks. This problem is solved by training a multi-task learning model that learns both tasks jointly, thus reducing conflicts between tasks. For this reason, a model where both outputs are predicted jointly is also used as a baseline. Its architecture consists of a single hidden layer with 32 hidden units. The explanation output is predicted from the previous layer. The last layer is the decision layer, a linear transformation of the explanation output. this baseline method is named as Multi-Task Classifier. In both baseline models, the Rectified Linear Unit (ReLU) is used as an activation function in the hidden layers.

The following methods are also compared:

MTL PonderNet v1, as described in Equation 5.
MTL PonderNet v2, a variant of the MTL PonderNet v1 with the difference that the decision output is predicted from the explanation output, as in Equation 8.

PonderXNet v1, as described in Equation 7, with an additional term in the loss function, which will be further detailed below.
PonderXNet v2, as described in Equation 7, with the loss function shown in Equation 6.

To generate $\hat{y}_0^{dec}\|\hat{y}_0^{exp}$ the model described is integrated in Multi-Task Learning with the method and system of the present disclosure and connect them end-to-end. In the PonderXNet v1 variant, these initial predictions are included in the loss function as an additional term, as shown in Equation 9:

$$PonderXNetLoss = \alpha_2[\mathcal{L}(\hat{y}_0^{exp}, y^{exp}) + \mathcal{L}(\hat{y}_0^{dec}, y^{dec})] + L \quad (9)$$

where L and $\alpha_2$ represent the loss function in Equation 3 and a loss term coefficient, respectively. In contrast, in the PonderXNet v2 variant, this extra loss term is not added, resulting in the loss function shown in Equation 3. This way, instead of an initial prediction, a learnable embedding of the input is fed to the step function. By doing this, the aim is to provide the step function with a less constrained embedding.

The following pertains to an Experimental Setup. All models were optimized using Adam [12] with the default learning rate of 0.001 and betas of 0.9 and 0.999. The cross-entropy function was used as the loss function to optimize during the training process for each output. Both the single-task and multi-task learning models were trained with 100 epochs and the PonderNet - based models were trained with 20 epochs. The chosen step function of all PonderNet-based models is a Gated Recurrent Unit (GRU) with a hidden state of size 32 and the hyperparameter settings as described in PonderNet. In both PonderXNet v1 and PonderXNet v2 models, dropout was applied to the initial embeddings $\hat{y}_0^{dec}\|\hat{y}_0^{exp}$ with a value of 0.5 during training. The values of 0.6 and 0.1 were used for $\alpha_1$ and $\alpha_2$ respectively.

All the models were evaluated using holdout, where the data (sorted by timestamp) is split into a training set (85%) and a test set (15%). The results of the experimental setup were analyzed in terms of accuracy and F1 score for each output, joint accuracy for both outputs, and the number of parameters. We regard joint accuracy as the fraction of predictions our model got right for the explanation and decision simultaneously, instead of an average of the accuracy of each task. The joint accuracy is the most relevant metric to optimize for the use case of our datasets.

The following pertains to results. As shown in Tables 2 and 3, the present disclosure evaluated and compared a total of six methods on both insurance datasets. The results were averaged from 10 runs. When comparing the performance of the four Ponder-based models with the multi-task and the single-task learning classifiers, it was found that performance gains were obtained for all five metrics for both datasets A and B. Although, the performance improvement in Dataset B was not as significant as in Dataset A. This result supports the hypothesis that the Ponder-based models provide better joint accuracy between concept explanations and decisions compared to the MTL and STL methods, thus answering RQ1.

When evaluating the two PonderXNet versions to the two multi-task Ponder-Net versions, it was found that the PonderXNet versions had higher performance gains in most metrics, across both datasets using fewer parameters. The only exceptions were seen in Dataset A for both metrics $y^{exp}$ F1 and $y^{exp}$ Accuracy where both multi-task PonderNet versions showed higher gains in performance. However, for Dataset B, both PonderXNet versions showed similar performances for the metrics $y^{dec}$ F1 and $y^{dec}$ Accuracy. Overall, both PonderXNet versions outperformed the PonderNet versions, thus answering RQ2.

For Dataset B, it was observed that PonderXNet v2 significantly outperformed PonderXNet v1. For Dataset A, similar performance was found between the two previous versions. Although PonderXNet v1 performed better on $y^{exp}$ F1 and $y^{exp}$ Accuracy, the opposite was observed for the $y^{dec}$ F1 and $y^{dec}$ Accuracy metrics in Dataset A. Overall, these results suggest that PonderXNet v2 is likely to be a superior version to PonderXNet v1, thereby answering RQ3.

The following pertains to a discussion. Although the experiments and results indicate that the disclosure has a superior performance over an MTL approach, the aim is to study how effective the pondering mechanism is and how much gains it actually brings. To address this, an analysis of the evolution of the joint accuracy is performed as the number of pondering steps increased to understand the impact of each additional step.

Additionally, another experiment is also conducted to explore the impact of reversing the target distribution in the KL loss term to drive the network to execute more pondering steps. This was done to understand the potential benefits of encouraging pondering, and its impact on the method's performance. It is also taken into account that the computational complexity of the method increases as more pondering is executed. Equation 10 shows the new reversed target distribution:

$$p_G(n) = \lambda_p(1 - \lambda_p)^{-n+N} \qquad (10)$$

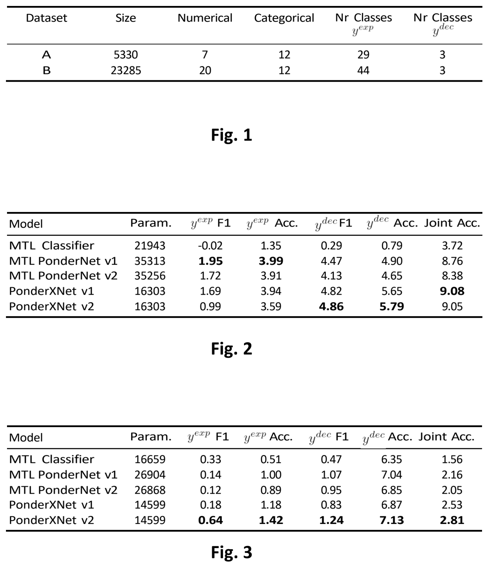

Regarding the effectiveness of the pondering mechanism, the plots in Figure 1 summarize the results of the experiment. The same conclusions can be drawn from each dataset. The joint accuracy converges quickly after one/two pondering steps in both variants of the disclosure, while in the PonderNet variants its convergence takes two/three extra steps. A plausible explanation for this difference could be that the variants of the present disclosure receive as input a more simplified and improved representation of the target, leading to less computational effort required to achieve accurate predictions when compared to both variants of PonderNet. The disclosure variants also converge to higher joint accuracy when compared to PonderNet variants. The last conclusion is also obtained by observing the joint accuracy in Tables 2 and 3. The rapid convergence observed in all Ponder-based models suggests that the predictions generated in the later pondering steps have a small impact on the final predictions.

The experiment that shows the impact of using a reversed target distribution in the KL loss is shown in Figure 2. Consider the histograms in Figure 3 for a better understanding of how we invert the target distribution. On the histogram of Figure 3a, we observe the distribution of the PonderNet. In order to reduce the computational complexity of the model, a positive skew of the distribution was induced. The histogram of Figure 3b shows the reversed target distribution, that presents a negative skew. Such change will lead the model to increase the number of pondering steps and hence the computational complexity.

From the plots in Figure 2, we can conclude for both datasets that, in general, the reversed target distribution enables the models to converge with an additional one/two steps and ultimately achieve a slightly higher joint accuracy, when compared with the plots from Figure 1. However, the differences do not seem to be significant to justify the additional computational complexity. We must emphasize though, that considering different target distributions for the KL loss term might be an interesting research topic for future work and further developments of these methods.

Concept-based explainability is fundamental to explaining the predictions of DL models in a human-friendly fashion. It can be done in the form of MTL, although that can pose one main challenge: the decision and its explanation are not always in agreement. To tackle this issue, the present disclosure introduced the disclosed method and system for concept-based explainability. It is adapted for multi-task learning on account of a combined loss that allows learning a decision and its explanation jointly, and it self-corrects its predictions recurrently. This way, it can increase the agreement between both outputs. The present disclosure explored different variants and demonstrated their success, in terms of both predictive power and explainability, against a simple Single-Task classifier and a Multi-Task classifier. Flow diagrams of particular embodiments of the presently disclosed methods are depicted in figures. The flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on non-transitory computer readable medium having control logic for enabling execution on a computer system having a hardware-based computer processor, such as any of the servers described herein. Such a computer system typically includes memory storage configured to provide output from execution of the code which configures a hardware-based processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

A hardware-based computer processor, as used herein, refers to any system, device, or apparatus capable of processing data in accordance with the methods described in this disclosure. The hardware-based computer data hardware-based processor may include one or more hardware-based processors, such as a central processing unit (CPU), a graphics processing unit (GPU), a digital signal processor (DSP), or any combination thereof. These hardware-based processors may be implemented as a single chip, a multi-core processor, a distributed computing system, or any other suitable configuration. For example, this can be a central processing unit (CPU), such as an Intel® Core™ i7 processor, and memory modules, including 16 GB of DDR4 RAM. The system may include a solid-state drive (SSD) for storage, an optional GPU (e.g., NVIDIA® GeForce RTX™ 3060), and runs a standard operating system, such as Microsoft® Windows® or Linux®. For example, this can be an embedded system utilizing a microcontroller, such as the ARM® Cortex®-M4 processor, with onboard memory (e.g., 1 MB of flash storage and 256 KB of SRAM). This system operates with real-time operating system (RTOS) software and can be integrated into an industrial device. For example, this can also be a cloud-based virtual machine hosted on a server infrastructure, such as an Amazon Web Services (AWS) EC2 instance, featuring virtual CPUs (vCPUs) based on Intel® Xeon® or AMD EPYC™ processors. The instance can be configured for example with 32 GB of RAM, 1 TB of elastic block storage (EBS), and executes server-side software designed to perform the computational processes disclosed herein.

The hardware-based computer processor may further include memory (e.g., random access memory (RAM), read-only memory (ROM), flash memory, or other suitable storage devices) for storing instructions and data. The hardware-based processor executes instructions stored in memory to perform the functions described in the specification. The instructions may be implemented in any programming language, namely but not limited to assembly language, C, C++, Python, or Java.

The hardware-based computer processor may communicate with input/output devices (e.g., a keyboard, mouse, touchscreen, or display), peripheral devices, or external systems via wired or wireless connections, such as USB, Bluetooth®, Wi-Fi®, or Ethernet. The hardware-based processor may also be integrated with or connected to a network, including a local area network (LAN), wide area network (WAN), or the internet, to receive and transmit data.

The present disclosure is also particularly apt for execution on a GPU - graphics processing unit (a specialized processor explicitly designed for executing graphical algorithms), NPU - neural processing unit (a specialized processor explicitly designed for executing machine learning algorithms), or any other inherently parallel processing unit. For example, models were run on a Linux PC with Intel Xeon CPU cores and a NVIDIA GeForce RTX.

The present disclosure further facilitates efficient implementation on parallel or artificial neunal network specialized hardware architectures, including but not limited to Graphics Processing Units (GPUs), Neural Processing Units (NPUs), and other inherently parallel processing units. GPUs, characterized by a plurality of cores optimized for parallel execution of graphical or matrix-based computations, and NPUs, specifically tailored for the accelerated execution of machine learning algorithms, provide enhanced processing capabilities for the disclosure, in particular the disclosed models. In exemplary embodiments, the models were executed on a computing system comprising a Linux-based operating environment, Intel® Xeon® multi-core central processing units (CPUs), and a NVIDIA® GeForce® RTX-series GPU. The use of such parallel processing or neural network processing units enables a significant reduction in computational latency and an improvement in throughput for the training and inference stages of the disclosed models. Significantly, the disclosed architecture is inherently suited for implementation by parallel processing or neural network processing units.

Consequently, the invention leverages the architectural advantages of parallel processing to achieve enhanced computational efficiency, scalability, and responsiveness, thereby addressing the technical problem of optimizing resource utilization in high-dimensional machine learning tasks.

In certain embodiments, the hardware-based computer processor is configured to execute software, firmware, or other executable instructions designed to implement the features, methods, or systems disclosed herein. These embodiments may be implemented as standalone devices, as part of a distributed system, or within a cloud computing environment.

References

1. Banino, A., Balaguer, J., Blundell, C. (2021, May). PonderNet: Learning to Ponder. In 8th ICML Workshop on Automated Machine Learning (AutoML).

2. Holzinger, A., Saranti, A., Molnar, C., Biecek, P., Samek, W. (2022, April). Explain- able AI methods-a brief overview. In xxAI-Beyond Explainable AI: International Workshop, Held in Conjunction with ICML 2020, July 18, 2020, Vienna, Austria, Revised and Extended Papers (pp. 13-38). Cham: Springer International Publishing.

3. Kim, B., Wattenberg, M., Gilmer, J., Cai, C., Wexler, J., Viegas, F. (2018, July). Interpretability beyond feature attribution: Quantitative testing with concept activation vectors (tcav). In International conference on machine learning (pp. 2668-2677). PMLR.

4. Koh, P. W., Nguyen, T., Tang, Y. S., Mussmann, S., Pierson, E., Kim, B., Liang, P. (2020, January). Concept Bottleneck Models. In ICML.

5. Ruder, S. (2017). An overview of multi-task learning in deep neural networks. arXiv preprint arXiv:1706.05098.

6. Zhang, Y., Yang, Q. (2021). A survey on multi-task learning. IEEE Transactions on Knowledge and Data Engineering.

7. Vandenhende, S., Georgoulis, S., Van Gansbeke, W., Proesmans, M., Dai, D., Van Gool, L. (2021). Multi-task learning for dense prediction tasks: A survey. IEEE transactions on pattern analysis and machine intelligence, 44(7), 3614-3633.

8. Ghorbani, A., Wexler, J., Zou, J. Y., Kim, B. (2019). Towards automatic concept-based explanations. Advances in Neural Information Processing Systems, 32.

9. Belém, C., Balayan, V., Saleiro, P., Bizarro, P. (2021). Weakly supervised multi-task learning for concept-based explainability. ICLR 2021 Workshop on Weakly Supervised Learning (WeaSuL)

10. Graves, A. (2016). Adaptive Computation Time for Recurrent Neural Networks.

11. Pomponi, J., Scardapane, S., Uncini, A. (2021). A Probabilistic Re-Intepretation of Confidence Scores in Multi-Exit Models. Entropy, 24(1), 1.

12. Kingma, D., Ba, J. (2015). Adam: A Method for Stochastic Optimization. Proceedings of the 3rd International Conference on Learning Representations (ICLR 2015).

**Claims**

1. Computer-implemented method for self-adaptive recurrent machine-learning processing of a tabular dataset under a multi-task objective comprising a decision task and a concept-based explanation task to be carried out under a dynamic CPU and GPU real-time allocation, comprising the steps of:

   obtaining input records from said tabular dataset;
   allocating one or more CPUs and one or more GPUs by an orchestrator as a function of the obtained input records;
   feeding the obtained input records to a first machine-learning model classifier by the allocated one or more CPUs;
   obtaining, by the first machine-learning model classifier implemented by the allocated one or more GPUs, one or more concept-based explanation classes for each fed input record from the first machine-learning model classifier;
   feeding the obtained one or more concept-based explanation classes to a second machine-learning model classifier by the allocated one or more CPUs;
   obtaining, by the second machine-learning model classifier implemented by the allocated one or more GPUs, a decision class for the one or more concept-based explanation classes of each input record;
   recurrently carrying out until the allocated one or more CPUs determine that a cumulative halting probability prediction is higher than a predetermined halting probability threshold:

      dynamically reallocating, by the orchestrator, one or more GPUs as a function of real-time resource availability, and model complexity and estimated dataset size of the following recurrent steps;
      feeding, by the allocated one or more CPUs, said explanation and decision classes and a hidden machine-learning state to a third machine-learning model classifier implemented by the reallocated one or more GPUs to provide a step function to obtain a next hidden machine-learning state, updated one or more concept-based explanation classes, and a halting probability parameter;
      feeding, by the allocated one or more CPUs, the updated one or more concept-based explanation classes to a fourth machine-learning model classifier;
      obtaining, by the fourth machine-learning model classifier by the reallocated one or more GPUs, an updated decision class for the one or more concept-based explanation classes of each input record; and
      accumulating, by the allocated one or more CPUs, the halting probability parameter in the cumulative halting probability prediction;

   outputting, by the allocated one or more CPUs, the updated one or more concept-based explanation classes and the updated decision class.

2. Method according to the previous claim wherein the second and fourth machine-learning model classifier are the same machine-learning model classifier.

3. Method according to the previous claim, comprising the steps of:

   obtaining input records from said tabular dataset;
   allocating one or more CPUs and one or more GPUs by an orchestrator as a function of the obtained input records;
   feeding the obtained input records to a first machine-learning model classifier by the allocated one or more CPUs;
   obtaining, by the first machine-learning model classifier implemented by the allocated one or more GPUs, one or more concept-based explanation classes for each fed input record from the first machine-learning model classifier;
   feeding the obtained one or more concept-based explanation classes to a second machine-learning model classifier by the allocated one or more CPUs;
   obtaining, by the second machine-learning model classifier implemented by the allocated one or more GPUs, a decision class for the one or more concept-based explanation classes of each input record;
   recurrently carrying out until the allocated one or more CPUs determine that a cumulative halting probability prediction is higher than a predetermined halting probability threshold:

dynamically reallocating, by the orchestrator, one or more GPUs as a function of real-time resource availability, and model complexity and estimated dataset size of the following recurrent steps;

feeding, by the allocated one or more CPUs, said explanation and decision classes and a hidden machine-learning state to a third machine-learning model classifier implemented by the reallocated one or more GPUs to provide a step function to obtain a next hidden machine-learning state, updated one or more concept-based explanation classes, and a halting probability parameter;

feeding, by the allocated one or more CPUs, the updated one or more concept-based explanation classes to the second machine-learning model classifier;

obtaining, by the second machine-learning model classifier by the reallocated one or more GPUs, an updated decision class for the one or more concept-based explanation classes of each input record; and

accumulating, by the allocated one or more CPUs, the halting probability parameter in the cumulative halting probability prediction;

outputting, by the allocated one or more CPUs, the updated one or more concept-based explanation classes and the updated decision class.

4. Method according to any of the previous claims comprising the step of concatenating the one or more concept-based explanation classes and the decision class of each input record before feeding said explanation and decision classes to the third machine-learning model classifier.

5. Computer-implemented method for training a self-adaptive recurrent machine-learning system of a tabular dataset under a multi-task objective comprising a decision task and a concept-based explanation task to be carried out under a dynamic CPU and GPU real-time allocation, comprising the steps of:

obtaining input records from a training tabular dataset;

allocating one or more CPUs and one or more GPUs by an orchestrator as a function of the obtained input records;

feeding the obtained input records to a first machine-learning model classifier by the allocated one or more CPUs;

obtaining, by the first machine-learning model classifier implemented by the allocated one or more GPUs, one or more concept-based explanation classes for each fed input record from the first machine-learning model classifier;

feeding the obtained one or more concept-based explanation classes to a second machine-learning model classifier by the allocated one or more CPUs;

obtaining, by the second machine-learning model classifier implemented by the allocated one or more GPUs, a decision class for the one or more concept-based explanation classes of each input record;

recurrently carrying out until the allocated one or more CPUs determine that a predetermined number of iterations is reached:

dynamically reallocating, by the orchestrator, one or more GPUs as a function of real-time resource availability, and model complexity and estimated dataset size of the following recurrent steps;

feeding, by the allocated one or more CPUs, said explanation and decision classes and a hidden machine-learning state to a third machine-learning model classifier implemented by the reallocated one or more GPUs to provide a step function to obtain a next hidden machine-learning state, updated one or more concept-based explanation classes, and a halting probability parameter;

feeding, by the allocated one or more CPUs, the updated one or more concept-based explanation classes to a fourth machine-learning model classifier; and

obtaining, by the fourth machine-learning model classifier by the reallocated one or more GPUs, an updated decision class for the one or more concept-based explanation classes of each input record;

outputting, by the allocated one or more CPUs, the updated one or more concept-based explanation classes and the updated decision class; and

backpropagating a training loss function for minimizing a prediction loss of combined decision and concept-based explanation tasks from the outputted one or more concept-based explanation classes and the updated decision class, to update weights of the machine-learning model classifiers.

6. Method according to the previous claim wherein the backpropagating of the training loss function is carried out by one or more GPUs.

7. Method according to the previous claim wherein the orchestrator allocates one or more GPUs for the backpropagating of the training loss function.

8. Method according to any of the claims 5-7, wherein the training loss function is arranged for promoting exploration and for minimizing a prediction loss of combined decision and concept-based explanation task.

9. Method according to any of the claims 5-8, wherein the training loss function is defined as:

$$L = \sum_{n=1}^{N} p_n \mathcal{L}(\hat{y}_n, y) + \beta KL(p_n, p_G(\lambda_p)) \tag{3}$$

10. Method according to any of the claims 5-8, wherein the training loss function is defined as:

$$PonderXNetLoss = \alpha_2[\mathcal{L}(\hat{y}_0^{exp}, y^{exp}) + \mathcal{L}(\hat{y}_0^{dec}, y^{dec})] + L \tag{9}$$

where L is:

$$L = \sum_{n=1}^{N} p_n \mathcal{L}(\hat{y}_n, y) + \beta KL(p_n, p_G(\lambda_p)) \tag{3}$$

11. Method according to any of the claims 5-10, wherein the second and fourth machine-learning model classifier are the same machine-learning model classifier.

12. Method according to any of the previous claims wherein said machine-learning model classifiers are artificial neural networks selected from: multilayer perceptron networks, long short-term memory - LSTM - networks, recurrent neural network - RNN, encoder-decoder networks, encoder-decoder transformer networks, or combinations thereof.

13. Non-transitory computer-readable medium comprising computer program instructions for implementing a self-adaptive recurrent machine-learning processing of a tabular dataset under a multi-task objective comprising a decision task and a concept-based explanation task, which when executed by a processor, cause the processor to carry out the method of any of the claims 1-12.

14. System comprising a computer-readable memory and a computer processor configured to carry out the method of any of the claims 1-12.

| Dataset | Size | Numerical | Categorical | Nr Classes $y^{exp}$ | Nr Classes $y^{dec}$ |
|---------|------|-----------|-------------|-----------|-----------|
| A | 5330 | 7 | 12 | 29 | 3 |
| B | 23285 | 20 | 12 | 44 | 3 |

**Fig. 1**

| Model | Param. | $y^{exp}$ F1 | $y^{exp}$ Acc. | $y^{dec}$ F1 | $y^{dec}$ Acc. | Joint Acc. |
|-------|--------|--------------|----------------|--------------|----------------|------------|
| MTL Classifier | 21943 | -0.02 | 1.35 | 0.29 | 0.79 | 3.72 |
| MTL PonderNet v1 | 35313 | **1.95** | **3.99** | 4.47 | 4.90 | 8.76 |
| MTL PonderNet v2 | 35256 | 1.72 | 3.91 | 4.13 | 4.65 | 8.38 |
| PonderXNet v1 | 16303 | 1.69 | 3.94 | 4.82 | 5.65 | **9.08** |
| PonderXNet v2 | 16303 | 0.99 | 3.59 | **4.86** | **5.79** | 9.05 |

**Fig. 2**

| Model | Param. | $y^{exp}$ F1 | $y^{exp}$ Acc. | $y^{dec}$ F1 | $y^{dec}$ Acc. | Joint Acc. |
|-------|--------|--------------|----------------|--------------|----------------|------------|
| MTL Classifier | 16659 | 0.33 | 0.51 | 0.47 | 6.35 | 1.56 |
| MTL PonderNet v1 | 26904 | 0.14 | 1.00 | 1.07 | 7.04 | 2.16 |
| MTL PonderNet v2 | 26868 | 0.12 | 0.89 | 0.95 | 6.85 | 2.05 |
| PonderXNet v1 | 14599 | 0.18 | 1.18 | 0.83 | 6.87 | 2.53 |
| PonderXNet v2 | 14599 | **0.64** | **1.42** | **1.24** | **7.13** | **2.81** |

**Fig. 3**

**Fig. 4(a)**

**Fig. 4(b)**

**Fig. 5(a)**

**Fig. 5(b)**

Fig. 6(a)

Fig. 6(b)

**Fig. 7**

**Fig. 8(a)**

**Fig. 8(b)**

**Orchestrator**

Resource Allocation Engine

Complexity Analysis

CPU and Dynamic GPU Assignment

901

901 — **CPU Server** / CPU Compute

**GPU Server** / H100 80GB VRAM — 904

902 — **CPU Server** / CPU Compute

**GPU Server** / 4090 24GB VRAM — 905

**GPU Server** / 3060 8GB VRAM — 906

**Fig. 9**

European Patent Office

**EUROPEAN SEARCH REPORT**

Application Number

EP 25 22 7902

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | ANDREA BANINO ET AL: "PonderNet: Learning to Ponder", ARXIV.ORG, CORNELL UNIVERSITY LIBRARY, 201 OLIN LIBRARY CORNELL UNIVERSITY ITHACA, NY 14853, 12 July 2021 (2021-07-12), XP091011297, * the whole document * | 1-14 | INV. G06N3/045 G06N5/045 ADD. G06N3/084 G06N3/044 G06N3/0499 G06N3/09 |
| A | VARSHA PENDYALA ET AL: "Concept-Based Explanations for Tabular Data", ARXIV.ORG, CORNELL UNIVERSITY LIBRARY, 201 OLIN LIBRARY CORNELL UNIVERSITY ITHACA, NY 14853, 13 September 2022 (2022-09-13), XP091316568, * Sections 1, 3-5 * | 1-14 | |
| A | JIE CHEN ET AL: "Adaptive Explainable Neural Networks (AxNNs)", ARXIV.ORG, CORNELL UNIVERSITY LIBRARY, 201 OLIN LIBRARY CORNELL UNIVERSITY ITHACA, NY 14853, 6 April 2020 (2020-04-06), XP081637759, * Sections 1, 3 * | 1-14 | |

TECHNICAL FIELDS SEARCHED (IPC)

G06N

The present search report has been drawn up for all claims

| Place of search | Date of completion of the search | Examiner |
|---|---|---|
| The Hague | 12 February 2026 | Efthymiadis, K |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230205674 A1

- US 11663522 B2

**Non-patent literature cited in the description**

- **BANINO, A.** ; **BALAGUER, J.** ; **BLUNDELL, C.** PonderNet: Learning to Ponder. *In 8th ICML Workshop on Automated Machine Learning (AutoML*, May 2021

- Explain- able AI methods-a brief overview. **HOLZINGER, A.** ; **SARANTI, A.** ; **MOLNAR, C.** ; **BIECEK, P.** ; **SAMEK, W**. In xxAI-Beyond Explainable AI: International Workshop, Held in Conjunction with ICML 2020. Springer International Publishing, 18 July 2020, 13-38

- **KIM, B.** ; **WATTENBERG, M.** ; **GILMER, J.** ; **CAI, C.** ; **WEXLER, J.** ; **VIEGAS, F**. Interpretability beyond feature attribution: Quantitative testing with concept activation vectors (tcav). *In International conference on machine learning*, July 2018, 2668-2677

- **KOH, P. W., NGUYEN, T., TANG, Y. S., MUSSMANN, S., PIERSON, E., KIM, B., LIANG, P**. Concept Bottleneck Models. *ICML*, January 2020

- **RUDER, S**. An overview of multi-task learning in deep neural networks. *arXiv preprint arXiv:1706.05098*, 2017

- **ZHANG, Y** ; **YANG, Q**. A survey on multi-task learning. *IEEE Transactions on Knowledge and Data Engineering*, 2021

- **VANDENHENDE, S** ; **GEORGOULIS, S.** ; **VAN GANSBEKE, W.** ; **PROESMANS, M.** ; **DAI, D.** ; **VAN GOOL, L.** Multi-task learning for dense prediction tasks: A survey.. *IEEE transactions on pattern analysis and machine intelligence*, 2021, vol. 44 (7), 3614-3633

- **GHORBANI, A.** ; **WEXLER, J.** ; **ZOU, J. Y.** ; **KIM, B.** Towards automatic concept-based explanations. *Advances in Neural Information Processing Systems*, 2019, 32

- **BELÉM, C.** ; **BALAYAN, V** ; **SALEIRO, P.** ; **BIZARRO, P.** Weakly supervised multi-task learning for concept-based explainability. *ICLR 2021 Workshop on Weakly Supervised Learning (WeaSuL)*, 2021

- **GRAVES, A.** *Adaptive Computation Time for Recurrent Neural Networks*, 2016

- **POMPONI, J.** ; **SCARDAPANE, S.** ; **UNCINI, A.** A Probabilistic Re-Intepretation of Confidence Scores in Multi-Exit Models. *Entropy*, 2021, vol. 24 (1), 1

- **KINGMA, D.** ; **BA, J.** Adam: A Method for Stochastic Optimization. *Proceedings of the 3rd International Conference on Learning Representations (ICLR 2015)*, 2015